# EUROPEAN PATENT APPLICATION

(11) **EP 1 431 890 A1**
(43) Date of publication of application: **23.06.2004**
(21) Application number: 02090415.7
(22) Date of filing: 18.12.2002
(51) Int. Cl.: G06F 17/60, A45D 40/00, G07F 13/06, G07F 13/10

(54) **Method and system for a pull purchase mode of personalized coloring products at the point of sale**

(71) Applicant: VP Creativity Lab. Ltd., Causeway Bay, Hong Kong (CN)
(72) Inventor: Phan, Gia Chuong, West Kowloon, Hong Kong (CN); Chung, Siu Fan Connie, West Kowloon, Hong Kong (CN)
(74) Representative: Scholz, Hartmut, Dipl.-Ing. Patentanwalt

(57) **Abstract**

Colors On Demand (COD), a method and system for automatic and instant custom colors blending and producing personalized coloring products, including but not limited to cosmetic coloring products (nail polish, lip coloring product, eye make-up coloring product, hair coloring product); colored pen products; paint and dye products to the specific demands of customers, specially matching with the colors of a certain personalized object or with the personal preferred colors or fashion trend colors. The COD system is further using intranet, extranet or internet wired or wireless network in an E-commerce environment with web based color matching, coloring product selection and online payment mode to be incorporated in the click and mortar business model from a pull purchase mode of personalized coloring products at the point of sale.

## Description

### FIELD OF THE INVENTION

The present invention generally relates to a system and methods for producing instantly and automatically custom made coloring products, including but not limited to cosmetic coloring products (nail polish, lip coloring product, eye make up coloring product, hair coloring product, face and body coloring product); colored pen products; paint and dye products matching with the color of a certain personalized object or with the personal preferred color or fashion trend color. The present invention relates also to the business model of a pull purchase mode from a distributed mass customization, flexible production and distribution system for coloring products in an intranet, extranet or internet environment of E-commerce to integrate the Information Technology (IT) business (E-commerce) with the traditional retail store business into a click and mortar business.

### BACKGROUND OF THE INVENTION

When a customer is wishing to purchase coloring products, in particularly cosmetic coloring products (nail polish, lip coloring product, eye make up coloring product or hair coloring product), colored pen products, paint and dye products matching with a particular personal preferred color, with the fashion trend color or with the color of a personalized object, she/he is often frustrated to find out that the choice is very limited with generally much less than 100 different colors to be chosen from the retail store shelves for each coloring product. Today's manufacturing and distribution system cannot respond to this customization's demand from customers by producing and stocking several hundreds different colors for each coloring product at the point of sale associated with very high inventory cost and large shelves' space. It is not in line with the retailer policy to keep more brand names with limited shelves space for each brand.

On the other hand, specially in the cosmetic industry, it is still not possible at the moment to buy nail vanish, lip gloss, fluid eye make up and hair coloring product with the same color matching with the personal preferred trend color or matching with the color of dress, hand bag and shoes from an apparatus in the retail store or from a vending machine.

The present invention provides a computerized automatic system using a color scanning devise to detect a custom color from the surface of a personalized object in order to let the apparatus within the system of the present invention automatically and instantly producing coloring product matching the said scanned color. The customer can also compose the personal preferred color or fashion trend color on the interactive display screen and get the desired coloring products from the apparatus instantly and automatically.

The IT network with web based application for color matching and selection will enable the COD system of the present invention operating in a more effective and efficient way to save cost and at the same time increase customer satisfaction in a click and mortar business environment.

The result of the present invention will change the way people selecting and buying coloring products using pull purchase mode: the customer decides the color and then pull out the desired, instantly manufactured coloring product from the apparatus of the present invention in a total customer satisfaction way with highly customization, re-productivity and availability of the desired coloring products through a fun shopping experience with instant fulfillment.

The customer can also access to a dedicated website to proceed the color matching and selection process in order to obtain the desired color with its color code and product code which can be used to pull the product out of the COD system at the point of sale in a click and mortar business environment.

On the other hand, the result of the present invention will also change the way how coloring products manufacturers producing and distributing its products by using a customer's pull purchase mode instead of the present manufacturer's push mode of pushing ready made coloring products into the store shelves for customer's selection. The implementation of the distributed, mass customization's production and distribution network under the present invention will put the production and distribution site right at the point of sale, next to the customer's location and thus shortening the supply chain and leading to zero inventory's and low distribution's cost with increasing customer satisfaction by instant fulfillment of customer's demand. The business dream of having the right product, at the right place and at the right time is thus materialized.

Cosmetic coloring products as known from US 5,971,351 and US 6,402,120 addressed partially this problem by creating a kit which lets an user or a sales person to blend different color pigments, bases, additives and then mold it into a conventional lipstick. The set back is the whole process is manual and time consuming. It requires some skills to perform each step of the process, specially the dosing and blending are relatively complicated and the result can not be consistent each time due to natural human errors to perform such multi steps task. On the other hand, the need to perform the molding process for the lipstick using wax and heat could harm the unskillful or/and incaution user or sales person with skin burning as a consequence.

US patent 4,817,262 revealed an automatic dispenser system of cosmetic products at the point of sale. US patent 5,903,465 and 6,177,093 disclosed an apparatus to blend cosmetic coloring product at the point of sale. They all lacked the networking possibility in an e-commerce environment.

US 6,440,175 and US 5,775,507 revealed a method of mixing hair coloring product but the whole process is again manual, time consuming and the product quality can not be consistent.

Colored pen products as known from US 6,425,702 and US 6,464,420 addressed the need of multicolor pen system but lack of the possibility to instantly and automatically fulfill the customer's desire for a particular pen color at the point of sale.

Colored paint or dye products as known from US 5,231,472 and US 6,400,906 addressed different color matching methods for obtaining certain target colors but they didn't reveal the novelty of the distributed mass customization, automatic and instant production and distribution system and its business model under the present invention.

On the contrary, the present invention responds to this customization's demand and gives to a customer the fun of unforgettable shopping experience with instant fulfilment by composing the personal preferred color or by selecting the trend colors or the color matching with the personalized object by means of an interactive computer aided system for coloring products on demand anywhere and anytime while leaving the color blending and production of the desired coloring products to the distributed, mass customization, automatic and instant Colors On Demand (COD) production and distribution system of the present invention.

The COD system can also be used to output paint sample for real painting testing in order to optimize the color matching before ordering big quantity using the right color code and product code.

All those above mentioned patents disclosed only the aspect of color mixing and dispensing but they didn't reveal the power of networking all those apparatus in an intranet, extranet or internet environment with the operation center where the customer can even do the color matching process at home to obtain the color code and product code through access to a dedicated website and pull purchase the coloring products from the apparatus within the system of the present invention using those product codes in a click and mortar business model. The system of the present invention can accept also RAL or Pantone color code which are recognize internationally special for paint and dye coloring product. The integration of different coloring products in the same family like cosmetic family or colored pen family or aqueous paint/dye family into one apparatus as an unattended vending machine is another novelty of the present invention in order to let the customer buy the full set of coloring products with the same color at one location. On the other hand, those patents didn't disclose the online advertising downloading function through the intranet, extranet or internet network where cosmetic manufacturer can download commercial video clip and trend colors to the apparatus via the said network overnight to be displayed on the color monitor in due time for using those apparatus at the point of sale more effectively and efficiently. The use of smartcard or magnetic card for coloring products identification and reordering, CRM (Customer Relationship Management) data and bonus allocation to preferred customers with frequent purchase is another novelty to store customer data locally into the card and let the customer access easily all the apparatus within the system of the present invention globally.

Once the color is chosen from the customer by scanning the surface of a personalized object or by self composing the preferred color or fashion trend color on the interactive color display screen, the color code in primary colors of Red, Yellow and Blue or other color codes in other color systems can be computed internally and automatically. By using the subtractive colors system to mix the right quantity of different primary colors and other supporting colors like Black and White, if necessary, a desired color and shade can be obtained. In the theory, the number of colors obtained from the primary colors Red, Yellow and Blue and other supporting colors like Black and White can be unlimited. In the commercial practice, up to 1000 colors can be targeted to design the apparatus within the system of the present invention.

The customer may further select additives like moisturizer, sunscreen, fragrant for cosmetic coloring products; or anti-fungal and anti-bacteria agent for paint products with metallic, pearl, matt, glossy or fluorescent base (aqueous, non-aqueous, solvent, oil base etc.) to be mixed automatically all together with the selected colorants and let the apparatus within the system of the present invention produce the desired coloring products instantly. On the other hand, the desired coloring product is outputted from the said apparatus with the product code (a combination of color code, bases data and additives data) laser engraved on the packaging container. The product code can be also stored in a smart card (chip card/IC card) or magnet card issued to the customer. The same customer can then at anytime get the same color of the desired coloring product from the designated apparatus within the system of the present invention by inserting her/his smart/magnet card into the said apparatus and selecting the right product code from the group of product codes already stored in the plastic card from the previous buying experiences using the COD system of the present invention.

The customers enjoy the freedom of re-productivity of the desired coloring products from the apparatus within the system of the present invention anytime at the point of sale while in the case of a ready made coloring products, the desired color may be out of stock or even discontinued, thus forcing the customers to restart the color matching process for the chosen color from other competitors, so that the consequence is the loosing of business.

The said apparatus within the system of the present invention can be installed everywhere indoor or outdoor, attended or unattended (as an automatic vending machine) at the point of sale. The customer can further use the internet access to a dedicated website to make a color matching process even at home and record the color code and product code for pull purchase at the apparatus of the present invention.

It is another objective of the present invention to provide a wired or wireless networking system in the intranet, extranet or internet environment for the apparatus within the system of the present invention to upload data to the operation center for efficient managing the refill service and at the same time collect the specific data of customer buying habit, preferred colors and the quantity and type of products manufactured by the system with associated date of purchase for accounting, statistic, MRP (Material Resource Planning) and CRM purpose.

It is another objective of the present invention to let the operation center download upgraded application software and fashion trend colors data to the computer incorporated in the apparatus within the system of the present invention via a wired or wireless networking system in the intranet, extranet or internet environment.

It is another objective of the present invention to create the business model of a pull purchase mode from a distributed mass customization, flexible manufacturing and distribution system with instant production of the desired coloring products and instant fulfillment of customer's demand for customization at the point of sale.

It is another objective of the present invention to let the customer access to a dedicated website to proceed the color matching and selection process in order to obtain the desired color with its color code and product code which can be used to pull the product out of the COD system at the point of sale in a click and mortar business environment.

In accordance with these aims and objectives, the present invention is directed towards an automatic COD system for custom production and distribution of coloring products instantly either in a commercial place or even at home. The system includes a color scanning devise, multiple containers of different colorants, multiple containers of additives, multiple containers of bases with at least one container of a suitable base, a means for automatic dosing the right colorant's quantity, selected bases and additives into an empty packaging container for mixing and forming the desired end product. The said filled packaging container with the desired end product is now laser engraved with the product code. The same product code can be also stored in the magnetic card or smartcard for serving as input for the system of the present invention for future re-ordering of the same product. The apparatus within the system of the present invention can be networked and linked to a virtual operation centre via wired or wireless network in the intranet, extranet or internet environment where the customer can also access a dedicated website to perform the color matching and selection process in order to obtain the color code and product code which can be use to pull the coloring product from the apparatus of the COD system.

### SUMMARY OF THE INVENTION

It is therefore a primary aim of the present invention to provide a system and method for automatic and instant custom colors blending and production of coloring products, including but not limited to cosmetic coloring products (nail polish, lip coloring product, eye make-up coloring product, hair coloring product, face and body coloring product); colored pen products; paint and dye products matching with the color of a certain personalized object or with the personal preferred color or fashion trend color.

It is an objective of the present invention to provide a fully automatic apparatus within the system, controlled and managed by a computer in an interactive mode for use in attended retail and commercial places or in fully unattended location as a vending machine which can produce instantly and automatically any colors of the coloring products matching with the color of a personalized object or with the personal preferred color or the fashion trend color while the present production and distribution system in the coloring industry require practically several hundreds different colors of each coloring product keeping as inventory at the point of sale. On the other hand the present invention allows the customers to acquire the desired product everywhere and at anytime with instant satisfaction from the apparatus within the system of the present invention in an attended commercial place like a retail store or in an unattended location as a stand alone 24 hours vending machine.

It is an objective of the present invention to provide a fully automatic apparatus within the system, controlled and managed by a computer in an interactive mode for use in attended retail and commercial places or in fully unattended location as a vending machine which can produce instantly and automatically any colors of the coloring products matching with the color of a personalized object or with the personal preferred color or the fashion trend color while the present production and distribution system in the coloring industry require practically several hundreds different colors of each coloring product keeping as inventory at the point of sale. On the other hand the present invention allows the customers to acquire the desired product everywhere and at anytime with instant satisfaction from the apparatus within the system of the present invention in an attended commercial place like a retail store or in an unattended location as a stand alone 24 hours vending machine.

It is another objective of the present invention to provide a system for personal use which can satisfy the highly customization in producing automatically and instantly any matching custom color in the cosmetic coloring products and colored pen products even at home;

It is another objective of the present invention to provide a system which not only allows the specific color of coloring products to be blended automatically by mixing the primary colorants and other supporting colors, if necessary, but which also allows various additives being selected by the customer from the group consisting of but not limited to moisturizes, nourishing component, vitamin component, sunscreens, fragrant for cosmetic coloring products or anti-fungal or anti-bacteria for paints and dyes products to be added with selected bases like metallic, matt, pearl, glossy or fluorescent base.

It is another objective of the present invention to provide a system for creating custom coloring product where a product code (a combination of color code, the bases data and the chosen additives data), represented by an alphanumeric number, can be recorded in a plastic magnetic card or in a smart card (chip card/IC card) and also laser-engraved on the packaging container for re-ordering.

### DEFINITIONS

Coloring products are all products which can impart color when applied to a surface of an object or to a human body.

It includes but not limited to cosmetic coloring products (nail polish, lip coloring product, eye slashes coloring product, eye shadow coloring product, eye brows coloring product, hair coloring product, face and body coloring product), colored pen products (any kind of colored pens consisting of a pen body incorporated a colored ink and a pen tip as applicator), paint and dye products (any kind of paints or dyes with aqueous, non aqueous, oil or solvent based).

Eye made up coloring products are all cosmetic coloring products for the eye and surrounding like eyelashes coloring product (mascara), eye shadow coloring products and eye brows coloring products.

Colorants are any dye, pigment or substance that can impart color when added or applied to cosmetic, the human body or surface of an object.

Subtractive colors systems are the colors systems where the mixing of the tree primary colors like Red, Yellow and Blue yields Black.

### BRIEF DESCRIPTION OF THE DRAWINGS

- **FIG. 1**: shows a flow chart describing the functions of the apparatus and control system of the present invention;
- **FIG. 2**: is the front view of an automatic vending machine for cosmetic coloring products like nail polish and lip coloring product, constructed according to the present invention for illustration only;
- **FIG. 3**: is the side view of an automatic vending machine for cosmetic coloring products like nail polish and lip coloring products, constructed according to the present invention for illustration only;
- **FIG. 4**: shows a magnetic smart card for use with the automatic vending machine for cosmetic coloring products shown in Figures 2 and 3;
- **FIG. 5**: shows an empty packaging container (for illustration only) for use with the automatic vending machine for cosmetic coloring products shown in Figures 2 and 3;
- **FIG. 6**: shows a distributed network for using automatic vending machines;
- **FIG. 7**: shows a click and mortar business model by using automatic vending machines and/or distributed networks.

### DETAILED DESCRIPTION OF THE PREFERRED EMBODIMENT

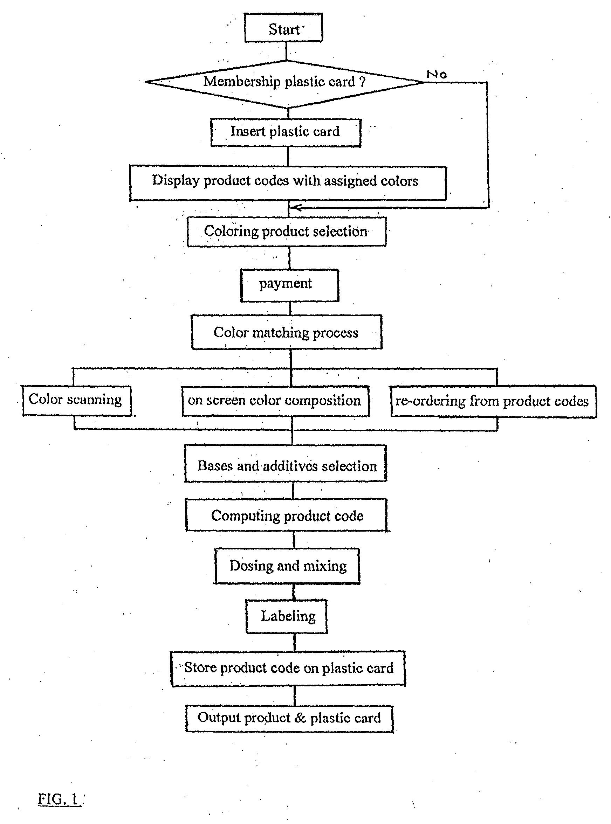

Figure 1 shows a flow chart describing different functions of the present invention used in an automatic vending machine for cosmetic coloring product like nail varnish and lip coloring product.

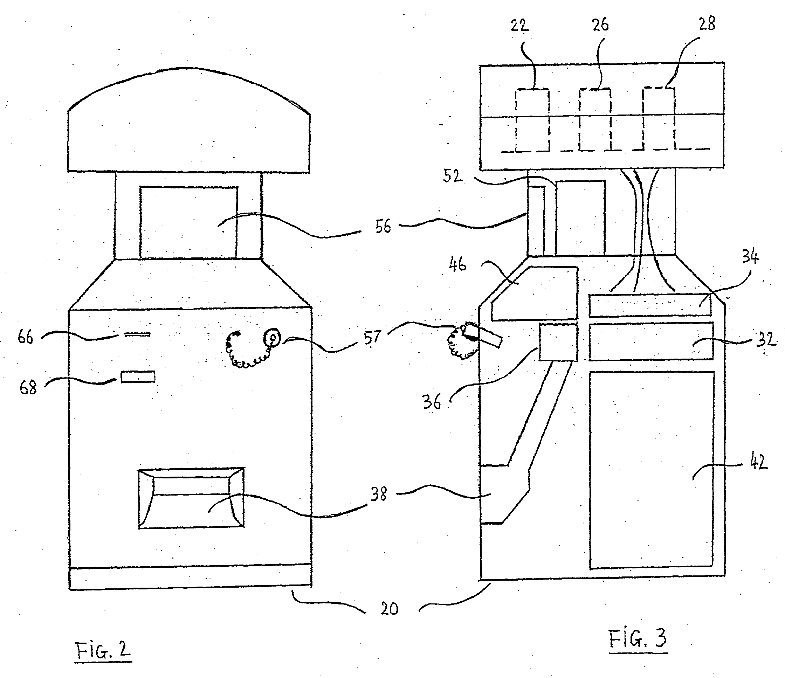

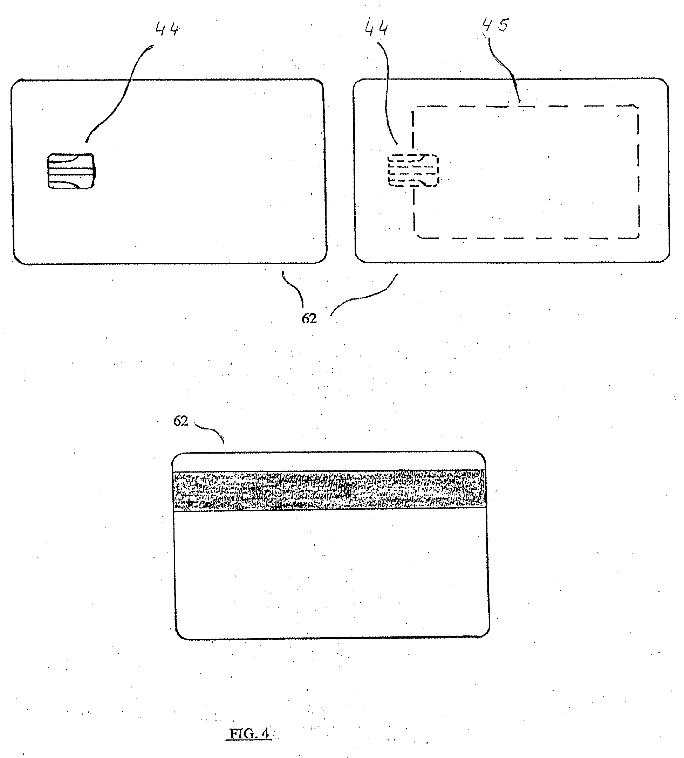

The preferred embodiment is shown in Figures 2 and 3 and is generally designated as apparatus 20. As shown therein, apparatus 20 includes color additives 22, bases 26, other additives 28, filling station 32, dosing station 34, mixing station 36, output station 38, empty packaging station 42, packaging cover station 46, computer system 52, touch screen color display 56 and color scanner 57. A membership smart card/magnet card 62, as shown in figure 4, could be put into a smart card/magnet card reader 66 or payment slot 68 for credit card. The membership smart card/magnet card 62 may have an embedded IC chip 44 and also may have an antenna 45.

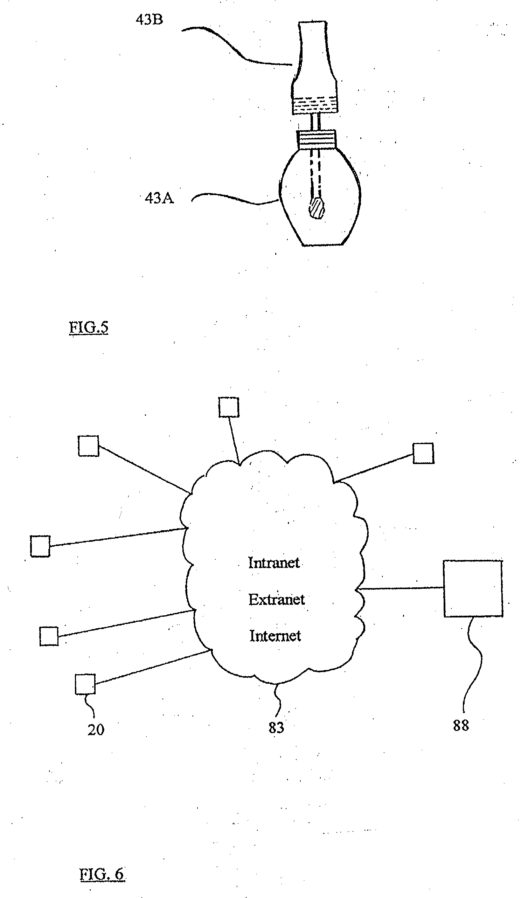

It is to be understood that the actual number of colorants 22, bases 26, additives 28, empty packaging containers 43A, as shown in figure 5, packaging container covers contained in each apparatus can certainly vary, but that the stated elements are all included in the preferred embodiment of the present invention. The size and variety of the containers of color additives, bases and other additives can be adapted to meet the particular requirement of the automatic production process of a cosmetic coloring product. On the other hand, empty packaging and cover incorporated with applicator can be designed to meet the fashion trend and the particular need of customers.

A business model of a pull purchase mode from a distributed mass customization, flexible manufacturing and distribution system with instant production of the desired coloring products and instant fulfilment of customer's demand for customization at the point of sale is shown in figure 6.

This business model can let the customer select any colors of a coloring product or match the color of any object in order for the selected coloring product to be produced automatically and instantly from the apparatus of the present invention at the point of sale.

This business model further can let the desired color and coloring product be'computed into a color code and product code which are stored in a magnetic card or a smart card for reordering process from a system of the present invention.

This business model can also be installed into a distributed and networked mass customization system in the intranet, extranet or internet environment 83 to a virtual operation center 88 to support the purchase activity of the customers for coloring products.

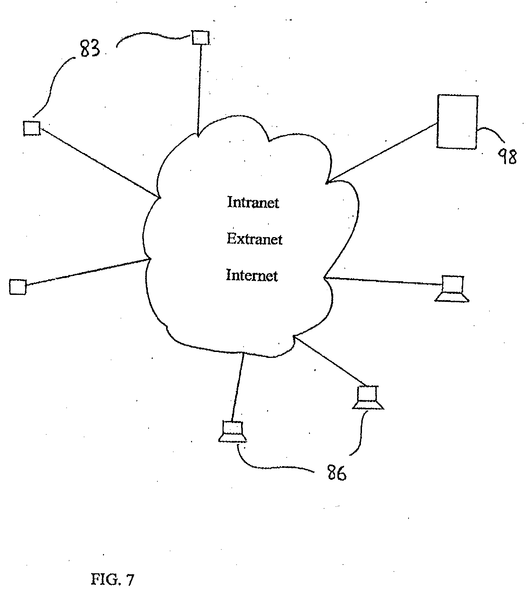

Figure 7 shows this business model which is extended into a click and mortar business model in an E-commerce environment. By this extended business model, customers can access the designated commercial website to select any colors of a coloring product or match the color of any object in order to use the so obtained color code and product code for the selected coloring product to be produced and distributed from the apparatus of the present invention at the point of sale.

### PROCEDURE

The customer can activate the apparatus 20 by touching the screen of the touch screen color display 56. The apparatus 20 greets the customer, by voice and/or by graphic on the display 56, and asks the customer to put the membership smart card/magnetic card 62 in the slot 66 for identification. In case for the first time buying, the customer who doesn't have a membership card 62 or the card 62 is not in hand can skip the above mentioned procedure and made a selection of cosmetic coloring products: in our case nail polish, lip, eye and hair coloring product.

The display 56 will show the unit price and ask for the quantity of each coloring product. The customer needs to confirm his/her choice and pays by inserting money or sliding the credit card in the payment slot 68 or by telephone billing procedure. Once the payment procedure is complete, the customer can start the selection of the color by means of color scanning or self compositing or selecting color on the interactive display screen 56. If the customer chooses the color by scanning, he/she can pull out the color scanner 57 and apply it to the surface of an object like dress, handbag or even shoes. Once the color is detected and displayed on the screen 56, the customer can confirm it or modify it according to the personal desired shades and then confirm it. On the other hand, the computer 52 can also propose different family of trendy shades on the display screen like Fashion Show colors, Cool colors, Warm colors, trendy Spring/Summer colors, trendy Autumn/Winter colors to guide the customer for color selection.

Once the color matching process is completed, the computer 52 will compute the color code of the confirmed color and ask the customer through the GUI (Graphical User Interface) from the display 56 for the selection of additives 28 like sunscreen and bases 26 like metallic, pearl, matt, glossy or fluorescent base for the selected coloring product. The additive data and the bases data will be combined with the color code to form the product code. The computer 52 then controls the dosing station 34 to put the right quantity of all selected components together with the colorants into an empty packaging container 43A from the filling station.

It is understood that the colorants are used to create the custom color while the bases will form the texture and the basic homogeny substance for the specific coloring product.

The designated packaging container 43A filled with all those components from the dosing station will be then sealed by the designated container cover incorporated an applicator 43B distributed from the packaging covers station 46.

The mixing station 36 will mix the content in the said container 43A together by means of rotation or/and vibration or/and shaking method.

The end product will be then outputted to the customer with the laser engraved product code on its packaging container through an output station 38 from the apparatus and control system manufactured under the present invention.

The membership smart card/magnetic card with the stored product code will be also outputted to the customer for reordering record.

The data stored in the computer 52 like statistic data, accounting data, MRP data (Material Resource Planning), CRM data (Customers Relationship Management) will be transmitted periodically via a wired or wireless network in the intranet, extranet or internet environment 83 as shown in figure 6, to the operation centre 88 for managing the refill and replenish service of colorants, bases, additives as well as packaging containers and covers and also for marketing, manufacturing and accounting purpose.

Instead of performing the color matching and color selection in front of the apparatus of the COD system, the customer can do it also through a personal computer 86 via internet access 83 to a dedicated website stored in the webserver 98 which shows the same screen and function on the customer's personal computer 86 monitor like the computer monitor of the apparatus of the COD system. Coloring product ordering and payment can be done online in the usual E-commerce environment. A special one time valid purchase code is assigned to the customer via encrypted and secured internet transmission and the customer can input this purchase code to a dedicated apparatus of the COD system he/she wish to pull out the purchase coloring product.

Another possibility is that the customer can do only the color matching process through access to the website stored in the webserver 98 and registered the color code and product code which can be used to purchase the desired coloring from any apparatus of the COD system

In the B2B (business to business) mode with large ordered quantity, the customer can purchase the coloring products at the apparatus of the COD system using the color code and product code obtained from the color matching process on the website as samples for real case testing. The customer has thus the possibility to fine tune the color by slightly modifying the color code on the interactive screen and pull another set of samples for real case testing again and the procedure will be repeated until the customer is fully satisfy with the final color of the coloring product. The final color code and product code will then be used to order bigger quantity online with special delivery.

These possibilities integrate the E-commerce on the web (a click business) with the actual distribution of the coloring products from the apparatus of the COD system or by special delivery for big quantity (a mortar business) into a Click and Mortar business. As shown in Figure 7 the business model is extended into a click and mortar business model in an E-commerce environment. By this customers can access the designated commercial website to select any colors of a coloring product or match the color of any object in order to use the so obtained color code and product code for the selected coloring product to be produced and distributed from the apparatus of the present invention at the point of sale.

While the above mentioned automatic vending machine (apparatus) for cosmetic coloring products like nail polish and lip coloring product, constructed according to the present invention is susceptible of improvements and various alternative constructions, certain illustrative embodiments thereof have been shown in the drawings and will be described below. It should be understood, however, that there is no intention to limit the invention to the specific forms of the apparatus disclosed, but on the contrary, the intention is to cover all improvements, various alternative constructions and equivalents falling within the spirit and scope of the invention as defined by the appended claims.

## Claims

1. A method and system for automatic custom blending and producing coloring products according to the customization's request of a customer, comprising
• a color scanner which can detect the color of a given surface of an object and convert it into color code in primary colors of Red, Yellow and Blue or other equivalent color code system;
• an interactive color display, preferable with touch screen function, displaying the scanned color or other preset color pattern to guide the customer in the color matching process and in the selection of the coloring products;
• a production's module which can use the color code and other customer selected data for additives and bases to produce instantly and automatically the desired coloring products;
• a computer system to control and perform all tasks of the color matching, the production of coloring product and network communication.

2. The apparatus within the system of claim 1, wherein
• a plurality of containers (22) containing colorants, comprising at least one group of three containers, each containing one of Red, Yellow and Blue colorants for each specific coloring product adapted to be quantified automatically according to the computed color code;
• a plurality of containers (22) containing colorants, comprising at least one group of two containers, each containing one of the two supporting colors of White and Black colorants for each specific coloring product adapted to be quantified automatically according to the computed color code;
• a plurality of containers (26) containing bases including but not limited to metallic, matt, pearl, glossy or fluorescent base which can be any kind of organic or inorganic, aqueous or non-aqueous, oil or solvent composition for each coloring product where at least one container containing one suitable base;
• a plurality of containers (28) containing additives adapted to be added to the desired blend according to the selection of the customers from the color display screen.

3. The apparatus within the system of claim 1, wherein
• the additives are being selected from the group consisting of but not limited to moisturizes, nourishing component, vitamin component, sunscreens, fragrance components for cosmetic coloring products, anti-fungal and anti-bacterial for paints and dyes products;
• the custom made coloring product resulting in the automatic dosing and mixing of different colorants, one or more bases, selected additives in a packaging container by means of rotating or/and shaking or/and vibrating;
• the desired coloring product will be custom packed and labeled automatically and outputted to the customers at the point of sale within a short time.

4. The apparatus of claim 2 wherein different color shades in a same color tone family like pale, light, bright, vivid, deep, dark, dull, grayish, black and white can be displayed on the interactive color display screen, preferably touch screen monitor, in order to help customer's selecting or composing choice.

5. The apparatus of claim 2 wherein colorants containers, bases containers and additives containers can be easily removed and replaced by newly filled containers.

6. The apparatus in claim 2 wherein a cooling/heating system can be added to keep the contents of all containers fresh and storable by maintaining automatically a preset temperature so that the apparatus can be operated in any changing temperature environment, indoor or outdoor.

7. The apparatus in claim 2 wherein empty packaging containers are pre-stored and at least one empty packaging container is placed on the filling station.

8. The apparatus in claim 2 wherein the different colorants containers, bases containers and additives containers are connected via tubes to the automatic dosing station placed next to the filling station in such a way that right quantity of each component of colorants, bases and additives can fill automatically, by means of the dosing station, each empty packaging container placed on the filling station.

9. The apparatus of claim 2 wherein the filled packaging container is moved automatically to the mixing station for sealing with a proper cover incorporated with or without an applicator for the mixing process.

10. The apparatus in claim 2 wherein a mixing station, incorporated with or without a heating system, using rotation or/and vibration or/and shaking method can be applied for mixing of colorants, bases and additives into a homogeny product.

11. The apparatus in claim 2 wherein a cooling system can be added, if necessary, into the mixing station to cool down the final homogeny product after finishing the mixing process.

12. The apparatus of claim 2 wherein a product code (a combination of color code, bases data and additives data) is created and assigned to the ordered coloring product;

13. The apparatus of claim 2 wherein a printer, preferable a laser engraving devise, is incorporated in the apparatus to label the product code directly on the filled packaging container of the said coloring product.

14. The apparatus in claim 2 wherein a payment system is incorporated, consisting of payment by coins, paper money, credit card, debit card, pre-stored value card, membership card or by authorized mobile phone call access.

15. The apparatus in claim 2 wherein the product code can be stored into a smartcard (chip card/IC card) or a magnet card issued to each customer for reordering.

16. The apparatus in claim 2 where a wired or wireless data networking system can be installed to upload information and data to a virtual operation center (88) and vice versa downloading instructions, upgraded software and updated advertisement presentation from the virtual operation center to each of the apparatus (20) of the present invention which are networked altogether with the virtual operation center.

17. The apparatus of claim 2 to be used as an unattended automatic vending machine wherein the payment can be effected by coin, paper money, credit card, debit card, value stored card or by authorized mobile phone call access and the payment will be debited from the monthly phone bill.

18. The apparatus as in claim 2 wherein different coloring products can be incorporated in the same apparatus of the present invention.

19. The business model of a pull purchase mode from a distributed mass customization, flexible manufacturing and distribution system with instant production of the desired coloring products and instant fulfilment of customer's demand for customization at the point of sale.

20. The business model according to claim 19 wherein customers can select any colors of a coloring product or match the color of any object in order for the selected coloring product to be produced automatically and instantly from the apparatus of the present invention at the point of sale.

21. The business model according to claim 19-20 wherein the selected color or the matching color from the system of the present invention can be computed into color code and product code which are stored in a magnetic card or a smart card for reordering process.

22. The business model according to claim 19-21 wherein a distributed and networked mass customization system in the intranet, extranet or internet environment to an virtual operation center can be installed to support the purchase activity of the customers for coloring products.

23. The business model in claim 19-22 is extended into a click and mortar business model in an E-commerce environment where the customer can access the designated commercial website to select any colors of a coloring product or match the color of any object in order to use the so obtained color code and product code for the selected coloring product to be produced and distributed from the apparatus of the present invention at the point of sale.
